# EUROPEAN PATENT APPLICATION

(11) **EP 1 191 451 A2**
(43) Date of publication of application: **27.03.2002**
(21) Application number: 01120807.1
(22) Date of filing: 29.08.2001
(51) Int. Cl.: G06F 13/12

(54) **Radio apparatus for storing and managing data to be processed by data-processing apparatuses**

(30) Priority: 25.09.2000 JP 2000291292
(71) Applicant: Kabushiki Kaisha Toshiba, Tokyo (JP)
(72) Inventor: Chihoko, Yahiro, c/o Toshiba Kaibushiki Kaisha, Minato-ku Tokyo 105-8001 (JP)
(74) Representative: Henkel, Feiler, Hänzel

(57) **Abstract**

A data management system comprising a portable data-processing apparatus (10), a radio apparatus (20) having a memory device and inserted in a slot of the data-processing apparatus (10), and various peripheral apparatuses (30) such as a computer. The radio apparatus (20) transfers the data items acquired by the data-processing apparatus (10) to at least one of the peripheral apparatuses (30), which is possessed by the owner of the data-processing apparatus (10) or the radio apparatus (20), whereby the data items are stored into the peripheral apparatus (30). The radio apparatus (20) also manages the places at which the data items are stored in the peripheral apparatus (30). Thus, the user need not remember the places at which the data items are stored in the peripheral apparatus (30).

## Description

The present invention relates to a radio apparatus for use in data-processing apparatuses such as mobile telephones. The invention also relates to a data management method that uses the radio apparatus.

Various types of small data-processing apparatuses such as multi-function mobile telephones, each being battery-driven one and having a radio communication function, have been developed in recent years. They are portable and can be connected to other data-processing apparatuses through, for example, the Internet. They can therefore acquire desired data, including text data, music and images, wherever they are located and whenever their users want.

Made small and portable, these data-processing apparatus do not incorporate a large memory device that can store a great amount of data. To store the data a small data-processing apparatus has acquired, the apparatus has a slot into which a memory card can be inserted into the apparatus and from which the memory card can be removed. Alternatively, the apparatus has a connector for connecting the data-processing apparatus to an external memory device having a large storage capacity.

The user may first stores the data, which the data-processing apparatus has acquired, into the memory card, and then transfers the data from the memory card to the external memory device. Alternatively, the user may first connect the small data-processing apparatus to the external memory device, by using a cable, and then transfers the data from the apparatus to the external memory device through the cable.

Recently portable radio terminals have been developed. When a portable radio terminal receives a large amount of data, the data is transferred to the computer, e.g., note-type computer, which is connected to the portable radio terminal. When the portable radio terminal receives a small amount of data, the display incorporated in the terminal displays the data, or the memory provided in the terminal stores the data.

Once data has been stored, the user must remember which memory stores which data item, the memory incorporated in the note-type computer or the memory provided in the terminal. So long as a relatively small number of data items are stored in the either memory, the user do not have so many problems. As more and more data items are stored into the memory device, however, it will be increasing difficult for the user to read any desired data item from the memory.

An object of the present invention is to provide a radio apparatus, a data management system, and a data management method, with and in which a user can save data in any appropriate memory, without the necessity of remembering in which memory the data is stored.

To achieve the object, a radio apparatus according to the invention being connectable to a data-processing apparatus. The radio apparatus comprises: an apparatus-detecting device configured to detect a peripheral apparatuses; a control device configured to transfer by radio communication data items acquired by the data-processing apparatus to the peripheral apparatus detected by the apparatus-detecting device; and a data management device configured to manage places at which the data items are transferred to the peripheral apparatus.

The radio apparatus transfers by radio communication the data items acquired by the data-processing apparatus to a peripheral apparatuses. The data items are stored into the peripheral apparatus. The radio apparatus manages the places at which the data items are transferred to the peripheral apparatus. Therefore, the user need not remember the places at which the data items are stored in the peripheral apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a data management system according to an embodiment of this invention;
FIG. 2 is a block diagram illustrating the apparatuses incorporated in the data management system shown in FIG. 1;
FIG. 3 is a flowchart showing the sequence of operations the data-processing apparatuses provided in the system performs to store data;
FIG. 4 is a flowchart showing the first sequence of operations the radio apparatus provided in the system performs to store data;
FIG. 5 is a table showing data items stored in the RAM incorporated in the radio apparatus;
FIG. 6 is a table showing the data items (including the data items representing the addresses to which data should be transferred);
FIG. 7 is a diagram depicting the addresses assigned to the peripheral apparatuses used in the data management system;
FIG. 8 is a table showing the relation between the addresses assigned to the peripheral apparatuses and the data items representing the owners of the peripheral apparatuses, which are all stored in the RAM provided in the radio apparatus;
FIG. 9 is a flowchart showing the second sequence of operations the radio apparatus provided in the system performs to store data;
FIG. 10 is a flowchart showing the third sequence of operations the radio apparatus provided in the system performs to store data;
FIG. 11 is a table showing the relation between the attributes of the data items and the peripheral apparatuses that can store the data items, all stored in the RAM provided in the radio apparatus;
FIG. 12 is a table showing the relation between the addresses of the peripheral apparatuses and the types thereof, all stored in the RAM provided in the radio apparatus;
FIG. 13 is a flowchart showing the fourth sequence of operations the radio apparatus provided in the system performs to store data; and
FIG. 14 is a flowchart showing the sequence of operations the data-processing apparatuses and the radio apparatus perform to acquire the data stored.

An embodiment of the present invention will be described, with reference to the accompanying drawings.

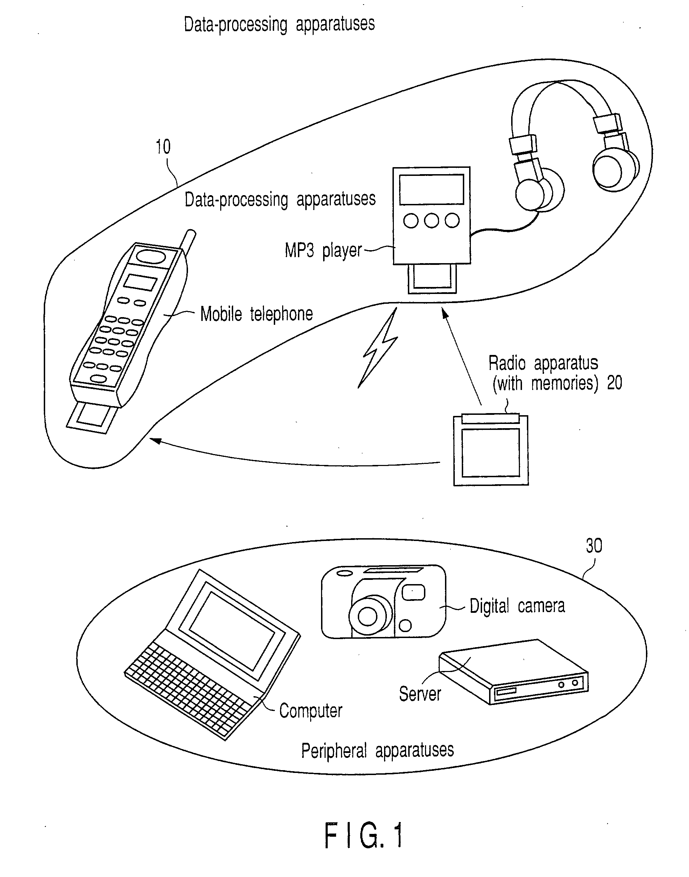

FIG. 1 shows a data management system that is an embodiment of the present invention.

As FIG. 1 shows, the data management system comprises various data-processing apparatuses 10, a radio apparatus 20 incorporating a memory, and various peripheral apparatuses 30. The data-processing apparatuses 10 are a mobile telephone and an MP3 player (MPEG-1 Audio Layer-III). The peripheral apparatuses 30 are a computer, a digital camera and a server.

Each of the data-processing apparatuses 10 has a slot, into which the radio apparatus 20 can be inserted and from which the apparatus 20 can be removed. Once inserted in the apparatus 10, the radio apparatus 20 can receive data transferred from the data-processing apparatus 10. The owner of the apparatus 10 therefore uses the apparatus 20 as a medium for storing the data the data-processing apparatus 10 has processed.

The radio apparatus 20 is shaped like a card. It has a radio communication function of transmitting and receiving data to and from the peripheral apparatuses 30 through radio communication paths. The radio communication function is, for example, Bluetooth(TM). Bluetooth is a short-distance communication standard that uses the 2.4GHz-ISM (Industrial Science Medical) band to achieve radio communications within a radius of 10 m or 100 m.

Each of the peripheral apparatuses 30 has a radio communication function, too. That is, each peripheral apparatus 30 can transmit and receive data to and from any one of the data-processing apparatuses 10 once the radio apparatus 20 is inserted in the data-processing apparatus 10.

The radio apparatus 20 can transmit the data transferred from any one of the data-processing apparatus 10 to any one of the peripheral apparatus 30 and can make the apparatus 30 to store the data. Further, the apparatus 20 has a data management function. More specifically, it determines where in the apparatus 30 the data should be stored and manages the data stored in the apparatus 30. It is therefore unnecessary for the user to remember which data item is stored in the peripheral apparatus 30 or where the data item is stored in the apparatus 30. The data management function will be described below in detail.

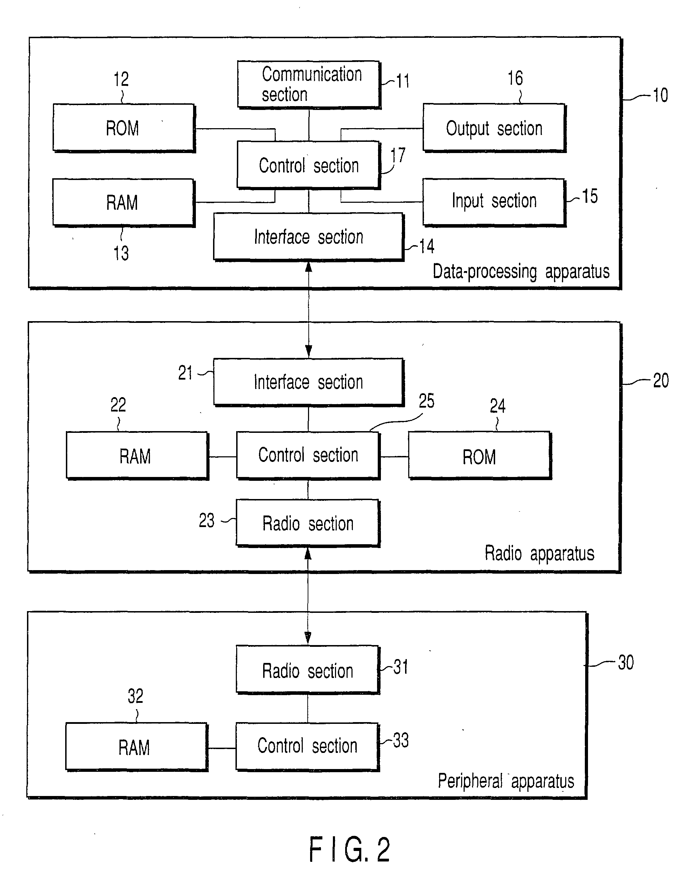

FIG. 2 is a block diagram illustrating one of the data-processing apparatuses 10, the radio apparatus 20 and one of the peripheral apparatuses 30, all incorporated in the data management system.

The data-processing apparatus 10 shown in FIG. 2 comprises a communication section 11, a ROM 12, a RAM 13, an interface section 14, an input section 15, an output section 16, and a control section 17.

The transmitting section 11 is designed to transmit and receive data to and from the other data-processing apparatuses 10. The section 11 corresponds to the radio section of, for example, a mobile telephone. The ROM 12 is a memory device holding the program that controls the data-processing apparatus 10. The RAM 13 is a memory device for temporarily storing the data acquired from the other data-processing apparatuses 10 through the communication section 11 and the data the program is using to control the apparatus 10.

The interface section 14 controls the connection between the radio apparatus 20 inserted into the slot of the apparatus 10. Via the section 14 the data-processing apparatus 10 transmits and receives data to and from the radio apparatus 20. The input section 15 is incorporated in the user interface of the data-processing apparatus 10 and corresponds to the keys, dial and microphone of, for example, a mobile telephone. The output section 16 is incorporated in the user interface, too, and corresponds to the display player and speaker of the mobile telephone.

The control section 17 controls and drives the other components of the data-processing apparatus 10 in accordance with the program held in the ROM 12.

The radio apparatus 20 comprises an interface section 21, a RAM 22, a radio section 23, a ROM 24, and a control section 25.

The interface section 21 controls the connection between the apparatus 20 and any one of the data-processing apparatuses 10 after the apparatus 20 has been inserted into the slot of the apparatus 10. Through the interface section 21 data is transferred between the radio apparatus 20 and the data-processing apparatus 10. The RAM 22 is a memory device for temporarily storing the data that is to be transmitted from the apparatus 10 and the data that program (held in the ROM 24) is using.

The radio section 23 accomplishes radio communication between the radio apparatus 20 and the peripheral apparatus 30. The ROM 24 is a memory device holding the program that is used to drive and control some of the other components of the radio apparatus 20.

The control section 25 drives and controls some of the other components of the radio apparatus 20, in accordance with the program held in the ROM 24.

The peripheral apparatus 30 shown in FIG. 2 has a radio section 31, a RAM 32, and a control section 33.

The radio section 31 is designed to achieve radio communication with the radio apparatus 20. The RAM 32 is a memory device for storing data transmitted to the radio section 31 from the radio apparatus 20. The control section 33 controls the radio section 31 and the RAM 32.

How data is saved or stored in the data management system will be described below. Assume that a mobile telephone (i.e., a data-processing apparatus 10) acquires data disclosed on the Internet by a server computer and stores the data thus acquired.

First, it will be described how the data-processing apparatus 10 acquires the data.

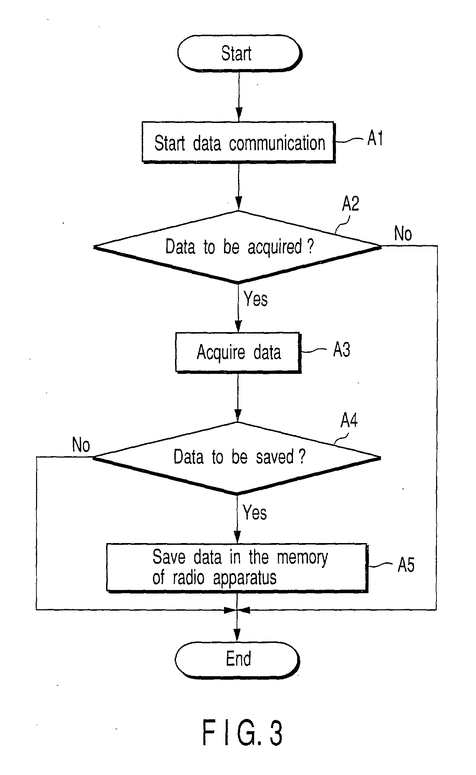

FIG. 3 is a flowchart showing the sequence of operations the data-processing apparatuses provided in the system performs to store data.

In the data-processing apparatus 10, the communication section 11 starts data communication with the server computer (Step). It is then determined whether apparatus 10 should acquire data the server computer discloses on the Internet (Step A2). If YES in Step A2, the communication section 11 transmits a request for the data. In response to the request, the server computer transmits the data. The data-processing apparatus 10 receives the data, which is written into the RAM 13 and temporarily stored therein (Step A3).

Next, it is determined whether the data thus acquired should be saved or not (Step A4). If YES in Step A4, the data is transferred from the RAM 13 via the interface section 14 to the radio apparatus 20 (Step A5).

Now it will be explained how the radio apparatus 20 operates to determine where the data should be stored and to perform data management.

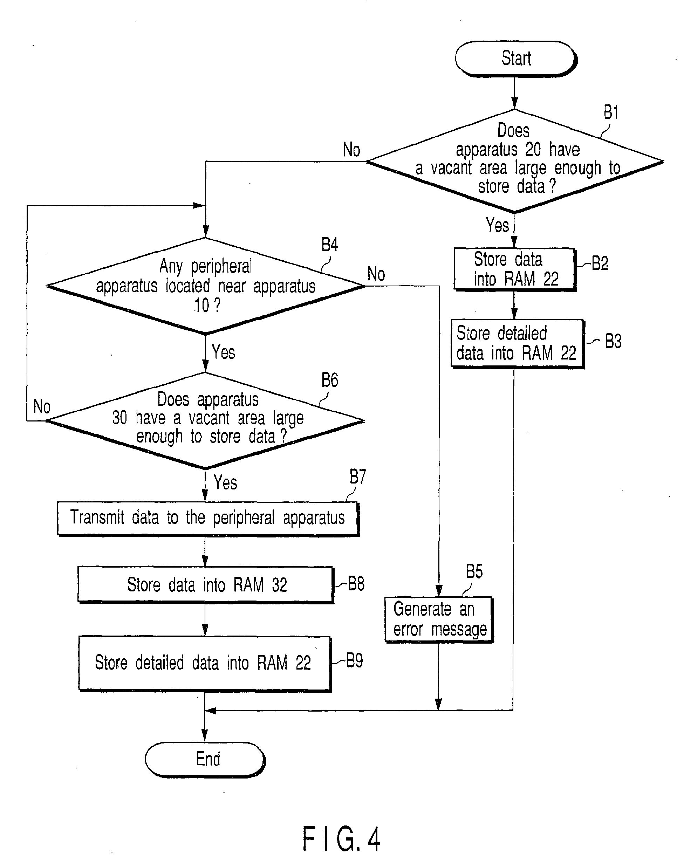

FIG. 4 is a flowchart showing the first sequence of operations the radio apparatus 20 performs to store data.

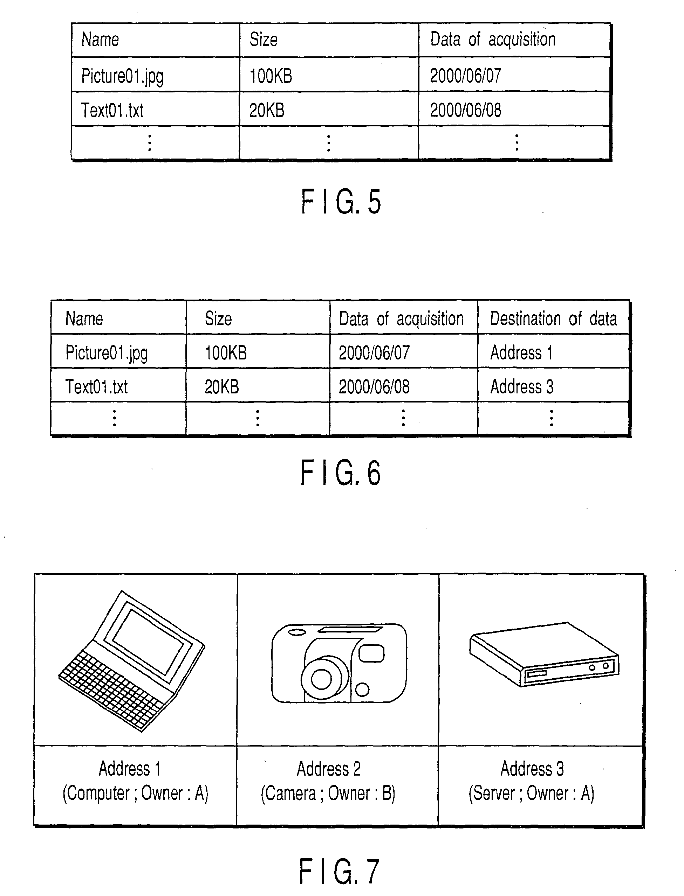

Upon receiving the data from the data-processing apparatus 10, the radio apparatus 20 determines whether the RAM 22 has a vacant area large enough to store the data received at the interface section 21 (Step B1). If YES in Step B1, the data is stored into the RAM 22 (Step B2). Further, information about this data is stored into the RAM 22, too (Step B3). The information contains, for example, the name of the data, the size thereof and the acquisition date thereof, as is illustrated in FIG. 5.

If NO in Step B1, that is, if the RAM 22 has no vacant area large enough to store the data received, it is determined whether any peripheral apparatus 30 of the owner of the radio apparatus 20 is located near the data-processing apparatus 10 (Step B4). If NO in Step B4, the radio apparatus 20 generates the data representing this fact. This data is supplied from the interface section 21 to the data-processing apparatus 10, causing the apparatus 10 to generate an error message (Step B5).

If YES in Step B4, or if any peripheral apparatus 30 of the owner is located near the data-processing apparatus 10, it is determined whether the RAM 32 of the apparatus 30 has a vacant area large enough to store the data (Step B6). This decision is made by means of radio communication via the radio section 23. If NO in Step B6, the operation returns to Step B4. In Step B4 it is determined again whether any peripheral apparatus 30 of the owner is located near the data-processing apparatus 10.

If YES in Step B6, or if the RAM 32 has a vacant area large enough to store the data, the data is transmitted from the radio apparatus 20 to the peripheral apparatus 30 as the radio section 23 operates (Step B7). In the peripheral apparatus 30, the data is stored into the RAM 32 (Step B8). Further, the information about this data is stored into the RAM 22 of the radio apparatus 20 (Step B9). The information stored in the RAM 22 contains the various data items shown in FIG. 6. More correctly, the information contains the addresses to which the data has been transferred, in addition to the data items shown in FIG. 5.

As described above, it is determined in Step B4 whether any peripheral apparatus 30 of the owner of the radio apparatus 20 is located near the data-processing apparatus 10. It will be explained how to make this decision.

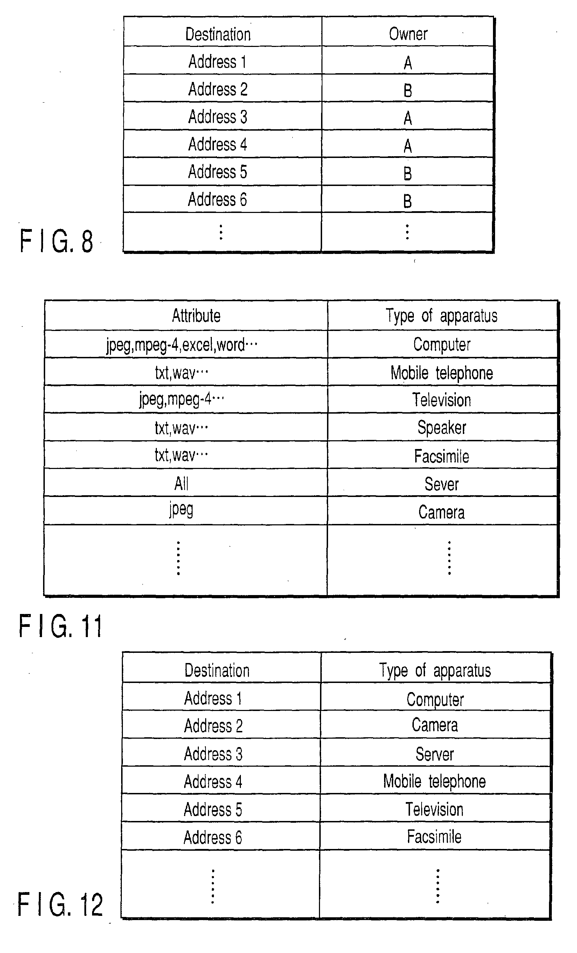

Assume that addresses have been assigned to the peripheral apparatuses 30 as is illustrated in FIG. 7. Also assume that the RAM 22 of the radio apparatus 20 stores the table of FIG. 8, which shows the relation between these addresses and the owners of the peripheral apparatuses 30. When the radio section 23 of the apparatus 20 starts radio communication with any one of the peripheral apparatuses 30, the table of FIG. 8 is referred to, thereby to identify the owner of the apparatus 30 with the address assigned to the peripheral apparatus 30. If the owner is identified to be one registered in the RAM 22, he or she is determined to be the owner of the radio apparatus 20, too. To input the table of FIG. 8 into the RAM 22, the user utilizes, for example, a dedicated utility program. More specifically, the user first inserts the radio apparatus 20 into the slot of the computer in which the utility program is executed and then operates the computer, thus writing the contents into the RAM 22 via the user interface provided by the utility program. Other data tables to be held in the RAM 22 are input in similar methods.

Thus, even if the peripheral apparatuses 30 include not only the owner's apparatus, but also other persons' apparatuses, the data transferred from the data-processing apparatus 10 is reliably stored in the RAM 22 of the radio apparatus 20 or in the RAM 32 of the owner's peripheral apparatus 30. In addition, the user need not remember which data item is stored in the peripheral apparatus 30 or where it is stored in the apparatus 30. This makes it easy for the user to use the data management system.

Either each data-processing apparatus 10 or each peripheral apparatus 30 may comprise a unit for registering the owner of the apparatus 30 and the address assigned to the owner. The unit may be one that displays instructions, showing the user how to register the owner and the address assigned to the owner.

In this case, the name of the owner and the address of the owner, both input by the user, may be stored into the RAM 22 of the radio apparatus 20 via the interface section 21 or radio section 23. Once stored into the RAM 22, the data about the owner of the ratio apparatus 20 can be used to determine whether the peripheral apparatus 30 owned by the owner can be used to store the data acquired by the data-processing apparatus 10.

Alternatively, the data about the owner of the ratio apparatus 20, i.e., the name and address of the owner, may be transferred from the data-processing apparatus 10 to the radio apparatus 20, not stored in the RAM 22 of the radio apparatus 20. If this is the case, the peripheral apparatus 30 owned by the owner of the apparatus 10, into which the radio apparatus 20 is inserted, can be identified as one in which the data should be saved.

If the data about the owner of the ratio apparatus 20 is stored into the RAM 22 of the radio apparatus 20, data can be stored into the peripheral apparatus 30 owned by the owner A of the radio apparatus 20 even if the apparatus 20 is inserted in the data-processing apparatus 10 of the other person B or C. If the data about the owner of the ratio apparatus 20 is transferred from the data-processing apparatus 10 to the radio apparatus 20, data can be stored into the peripheral apparatus 30 of the owner A if the radio apparatus 20 is inserted in the data-processing apparatus 10 of the owner A; and data can be stored into the peripheral apparatus 30 of the owner B if the radio apparatus 20 is inserted in the data-processing apparatus 10 of the owner B.

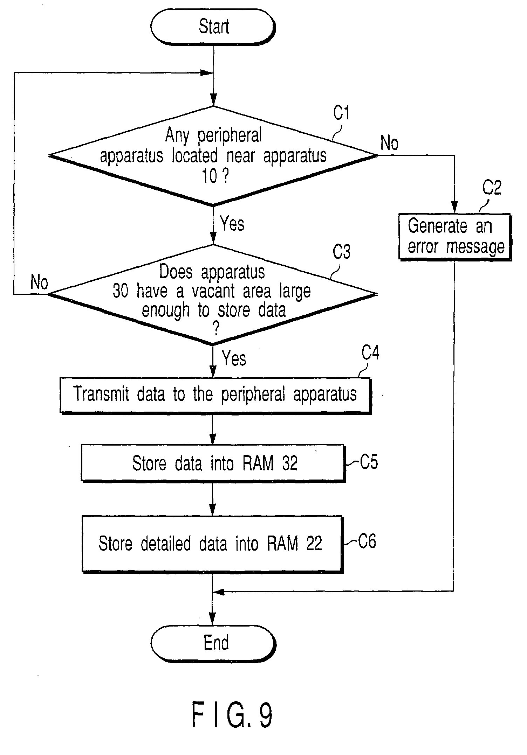

The second sequence of operations the radio apparatus 20 performs to store data will be described, with reference to the flowchart of FIG. 9.

The second sequence of operations differs from the first sequence, in that any peripheral apparatus 30 that can store data is searched for, not storing the data transferred from the data-processing apparatus 10 into the RAM 22. The radio apparatus 20 can operate in two modes. In the first mode, the data transferred from the apparatus 10 is stored into the RAM 22. In the second mode, the data is stored into the RAM 32 of the peripheral apparatus 30. (The second mode is the second sequence of operations.) The radio apparatus 20 would not operate in both the first mode and the second mode. Hence, the user can select the RAM 22 of the radio apparatus 20 or the RAM 32 of the peripheral apparatus 30, to store the data transferred from the data-processing apparatus 10.

In the radio apparatus 20, the interface section 21 receives the data from the data-processing apparatus 10. The radio section 23 effects radio communication with the peripheral apparatuses 30, determining whether any peripheral apparatus 30 is located near the radio apparatus 20 (Step C1). If NO in Step C1, the data indicating this fact is supplied via the interface section 21 to the data-processing apparatus 10, which generates an error message (C2).

If YES in Step C1, or if any peripheral apparatus 30 is located near the radio apparatus 20, the radio section 23 performs radio communication with the apparatus 30, thereby the radio apparatus 20 determines whether the RAM 32 of the apparatus 30 has a vacant area large enough to store the data transferred from the data-processing apparatus 10 (Step C3). If NO in Step C3, the operation returns to Step C1, in which any other peripheral apparatus 30 located near the radio apparatus 20 is searched for.

If YES in Step C3, or if the RAM 32 has a vacant area large enough to store the data, the radio section 23 transmits the data to the peripheral apparatus 30 (Step C4). In the apparatus 30, the data is stored into the RAM 32 (Step C5). Further, the information about this data is saved in the RAM 22 of the radio apparatus 20 (Step C6).

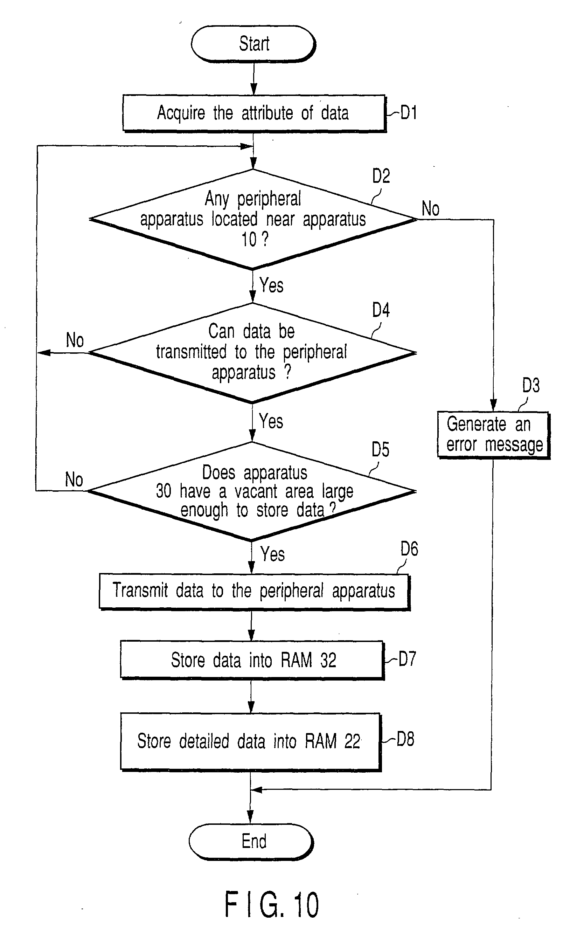

The third sequence of operations the radio apparatus 20 performs to store data will be described, with reference to the flowchart of FIG. 10.

The third sequence of operations differs from the second in that a peripheral apparatus 30 that should save the data transferred from the data-processing apparatus 10 is determined in accordance with the attribute of the data.

The radio apparatus 20 receives the data from the data-processing apparatus 10, at its interface section 21. The apparatus 20 then acquires the attribute of the data (Step D1). The radio section 23 of the apparatus 20 achieves radio communication with the peripheral apparatuses 30, thereby determining whether any apparatus 30 exists near the data-processing apparatus 10 (Step D2). If NO in Step D2, the radio apparatus 20 generates the data representing this fact. This data is supplied from the interface section 21 to the data-processing apparatus 10, which generates an error message (Step D3).

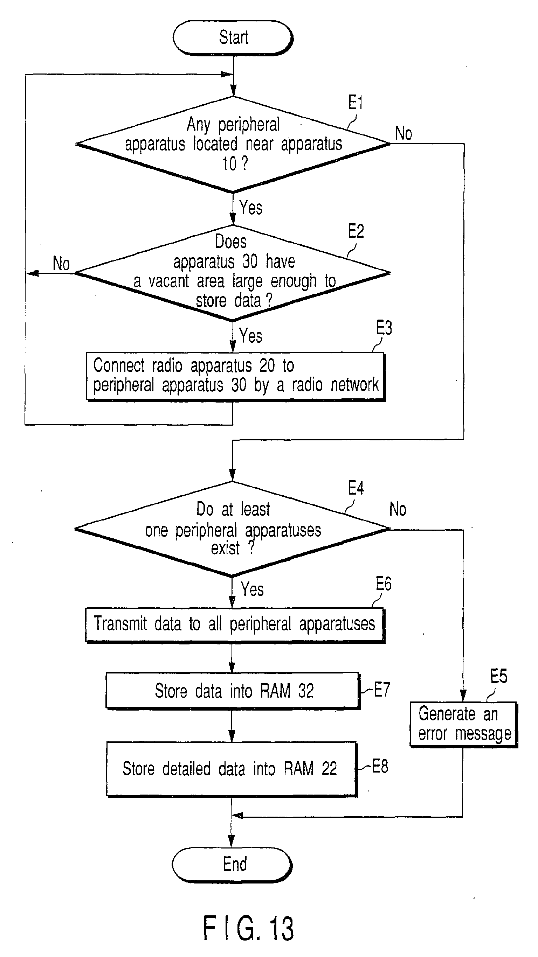

If YES in Step D2, or if peripheral apparatus 30 exists near the radio apparatus 20, the radio apparatus 20 determines whether the data can be saved in the peripheral apparatus 30 (Step D4). The RAM 22 of the radio apparatus 20 stores the tables shown in FIGS. 11 and 12, respectively. First, the table 11 of FIG. 11 is referred to, determining which type of a peripheral apparatus can save the data whose attribute has been acquired in Step D1. Then, the table of FIG. 12 is referred to, determining whether the peripheral apparatus 30 is of such a type.

If NO in Step D4, that is, if the data cannot be saved in the peripheral apparatus 30, the operation returns to Step D2, in which other peripheral apparatus 30 located near the radio apparatus 20 is searched for. If YES in Step D4, the radio section 23 performs radio communication with the peripheral apparatuses 30, thereby the radio apparatus 20 determines whether the RAM 32 of the apparatus 30 has an area large enough to store the data (Step D5). If NO in Step D5, the operation returns to Step D2, in which another peripheral apparatus 30 located near the apparatus 20 is search for.

If YES in Step D5, or if the RAM 32 has an area large enough to store the data, the radio section 23 transfers the data by radio to the peripheral apparatus 30 (Step D6). In the apparatus 30, the data is saved in the RAM 32 (Step D7). Moreover, the information about this data is stored into the RAM 23 (Step D8).

The data items transferred from the data-processing apparatus 10 can be stored into specific storage areas of the RAM 32 of the peripheral apparatus 30, in accordance with the attributes of the data items, such as document, music, image or the like. This makes it easy for the user to use the data management system.

The fourth sequence of operations the radio apparatus 20 performs to store data will be described, with reference to the flowchart of FIG. 10.

The fourth sequence of operations differs from the second in that the radio apparatus 20 transmits the data transferred it has received from the data-processing apparatus 10, to any peripheral apparatus 30 that can the data.

The radio apparatus 20 receives, at its interface section 21, the data transferred from the data-processing apparatus 10. In the radio apparatus 20, the radio section 23 effects radio communication with the peripheral apparatuses 30, determining whether any peripheral apparatus 30 of the owner of the apparatus 20 exists near the radio apparatus 20 (Step E1). If YES in Step E1, the radio section 23 performs radio communication with the peripheral apparatus 30,thereby the radio apparatus 20 determines whether the RAM 32 has an area large enough to store the data (Step E2). If YES in Step E2, the radio apparatus 20 is connected to the peripheral apparatus 30 by a radio network (Step E3). The operation then returns to Step E1. In Step E1, the radio apparatus 20 determines whether any other peripheral apparatus 30 of the owner of the apparatus 20 exists near the radio apparatus 20.

The sequence of Steps E1 to E3 is repeated until peripheral apparatuses 30 are not detected near the radio apparatus 20. In other words, these steps are repeated until it is determined in Step E1 that peripheral apparatus 30 of the owner of the apparatus 20 does not exist near the radio apparatus 20. Thereafter, it is determined whether at least one peripheral apparatus 30 exists that constitutes a radio network, jointly with the radio apparatus 20 (Step E4). If NO in Step E4, the apparatus 20 generates the data representing this fact. This data is supplied from the interface section 21 to the data-processing apparatus 10, which generates an error message (Step E5).

If YES in Step E4, or if at least one peripheral apparatus 30 exists, constituting a radio network, jointly with the radio apparatus 20, the radio section 23 transmits the data to the peripheral apparatus 30 (Step E6). In the apparatus 30, the data is stored into the RAM 32 (Step E7). Then, the information about the data is saved in the RAM 32 (Step E8).

The same data can therefore be stored in two or more peripheral apparatuses 30. The data can be acquired from any one of the peripheral apparatuses 30 that happens to exist near the radio apparatus 20.

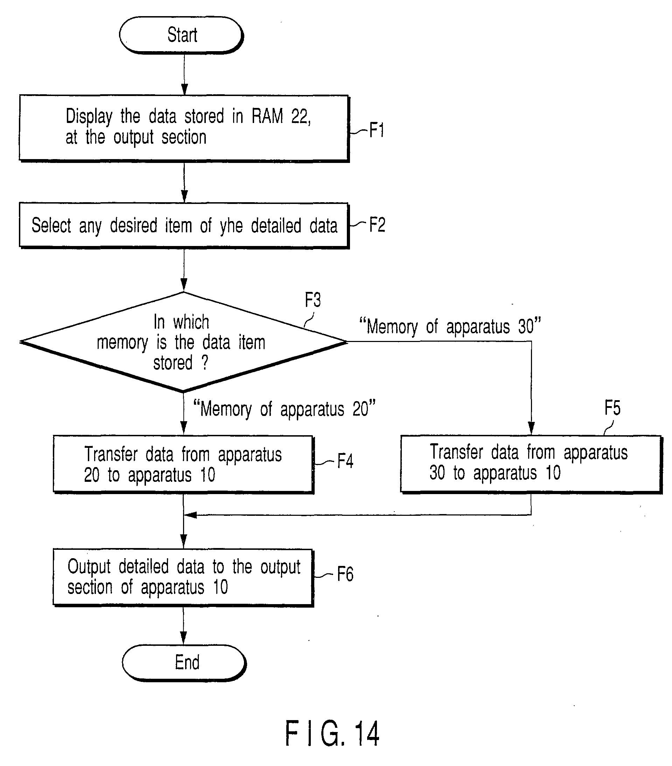

The sequence of operations the data-processing apparatus 10 and the radio apparatus 20 perform to acquire the data stored will be described, with reference to the flowchart of FIG. 14.

In the data-processing apparatus 10, the interface section 14 acquires the information stored in the RAM 22 of the radio apparatus 20, and the output section 16 displays the information (Step F1). Seeing the information displayed, the user selects any desired item of the information (Step F2). The data item selected is transferred via the interface section 14 to the radio apparatus 20. In the radio apparatus 20, the information stored in the RAM 22 is referred to. It is thereby determined where the data item selected is stored, in the radio apparatus 20 or any one of the peripheral apparatuses 30 (Step F3).

If the data item is stored in the apparatus 20, it is transferred via the interface section 21 to the data-processing apparatus 10 (Step F4). If the data item is stored in any one of the peripheral apparatuses 30, the radio section 23 of the apparatus 30 acquires the data item from the RAM 32 and transfers it via the interface section 21 to the data-processing apparatus 10 (Step F5).

In the data-processing apparatus 10, the output section 16 outputs the data that has been transferred from the radio apparatus 20 via the interface section 14 (Step F6).

As described above, the radio apparatus 20 with a memory device automatically stores and controls the data the data-processing apparatus 10 has acquired. Hence, the apparatus 20 can store data in an appropriate memory device. The user need not designate a memory device into which the data should be stored.

## Claims

1. A radio apparatus being connectable to a data-processing apparatus **characterized by** comprising:
means (25) for detecting a peripheral apparatuses;
means (25) for transferring data items acquired by the data-processing apparatus to the peripheral apparatus detected by the apparatus-detecting means; and
means (25) for managing places at which the data items are transferred to the peripheral apparatus.

2. The radio apparatus according to claim 1, which is designed to be attached to and removed from the data-processing apparatus.

3. A radio apparatus being connectable to a data-processing apparatus **characterized by** comprising:
a memory device (22) for storing data acquired by the data-processing apparatus;
means (25) for determining whether the memory device has an area to store the data;
means (25) for detecting a peripheral apparatuses when the determining means determines that the memory device does not have the area to store the data;
means (25) for transferring by radio communication data items acquired by the data-processing apparatus to the peripheral apparatus detected by the apparatus-detecting means; and
means (25) for managing places at which the data items are transferred to the peripheral apparatus.

4. The radio apparatus according to claim 3, which is designed to be attached to and removed from the data-processing apparatus.

5. A radio apparatus being connectable to a data-processing apparatus **characterized by** comprising:
means (35) for detecting the attributes of data items acquired by the data-processing apparatus;
means (25) for detecting a peripheral apparatuses in accordance with the attributes of data items detected by the attribute-detecting means;
means (25) for transferring by radio communication data items acquired by the data-processing apparatus to the peripheral apparatus detected by the apparatus-detecting means; and
means (25) for managing places at which the data items are transferred to the peripheral apparatus.

6. The radio apparatus according to claim 5, which is designed to be attached to and removed from the data-processing apparatus.

7. A radio apparatus being connectable to a data-processing apparatus **characterized by** comprising:
means (25) for detecting at least two peripheral apparatuses, which have predetermined data items;
means (25) for constituting a network that includes the peripheral apparatuses detected by the apparatus-detecting means;
means (25) for transferring by radio communication data items acquired by the data-processing apparatus to the peripheral apparatuses on the network constituted by the network-constituting means; and
means (25) for managing places at which the data items are transferred to the peripheral apparatuses.

8. The radio apparatus according to claim 7, which is designed to be attached to and removed from the data-processing apparatus.

9. A data management system **characterized by** comprising:
a data-processing apparatus (10);
a peripheral apparatus (30); and
a radio apparatus (20) to be connected to the data-processing apparatus including:
a table (22) showing a relation between first data items and second data items of the peripheral apparatuses;
a data-holding device (22) for holding the first data items;
means (25) for detecting the peripheral apparatuses, which has the first data item held in the data-holding device, by referring to the second data items of the peripheral apparatuses;
means (25) for transferring by radio communication data items acquired by the data-processing apparatus to the peripheral apparatus detected by the apparatus-detecting means; and
means (25) for managing places at which the data items are transferred to the peripheral apparatus.

10. A data management system **characterized by** comprising:
a data-processing apparatus (10);
a peripheral apparatus (30); and
a radio apparatus (20) to be connected to the data-processing apparatus including:
a table (22) showing a relation between first data items and second data items of the peripheral apparatuses (30);
a data-holding device (22) for holding the first data items;
a memory device (22) for storing data acquired by the data-processing apparatus;
means (25) for determining whether the memory device has an area to store the data;
means (25) for detecting the peripheral apparatuses which has the first data item held in the data-holding device by referring to the second data items of the table, when the determining means determines that the memory device does not have the area to store the data;
means (25) for transferring by radio communication data items acquired by the data-processing apparatus to the peripheral apparatus detected by the apparatus-detecting means; and
mans (25) for managing places at which the data items are transferred to the peripheral apparatus.

11. A data management system **characterized by** comprising:
a data-processing apparatus (10);
various peripheral apparatuses (30); and
a radio apparatus (29) to be connected to the data-processing apparatus including:
a table (22) showing a relation between first data items and second data items of the peripheral apparatuses;
means (25) for acquiring the first data items held in the data-processing apparatus;
means (25) for detecting the peripheral apparatuses which has the first data item acquired by the owner-data-acquiring means, by referring to the second data items of the table;
means (25) for transferring by radio communication data items acquired by the data-processing apparatus to the peripheral apparatus detected by the apparatus-detecting means; and
means (25) for managing places at which the data items are transferred to the peripheral apparatus.

12. A data management system **characterized by** comprising:
data-processing apparatus (10);
a peripheral apparatus (30); and
a radio apparatus (20) to be connected to the data-processing apparatus (10) including:
a table (22) showing a relation between first data items and second data items of the peripheral apparatuses;
mans (25) for acquiring first data items held in the data-processing apparatus;
a memory device (22) for storing data acquired by the data-processing apparatus;
means (25) for determining whether the memory device has an area to store the data;
means (25) for detecting the peripheral apparatuses which has the first data item acquired by the owner-data-acquirig means by referring to the second data items of the table, when the determining means determines that the memory device does not have the area to store the data acquired by the data-processing apparatus;
means (25) for transferring data items acquired by the data-processing apparatus to the peripheral apparatus detected by the apparatus-detecting means; and
means (25) for managing places at which the data items are transferred to the peripheral apparatus.

13. A data management method using a radio apparatus designed to be connected to the data-processing apparatus **characterized by** comprising:
a step (C1, C3) of detecting a peripheral apparatuses;
a step (C4, C5) of transferring by radio communication data items acquired by the data-processing apparatus to the peripheral apparatus detected; and
a step (C6) of managing laces at which the data items are transferred to the peripheral apparatus.

14. A data management method using a radio apparatus designed to be connected to the data-processing apparatus **characterized by** comprising:
a step (B1) determining whether a memory device incorporated in the radio apparatus has an area to store the data;
a step (No in B1, B4, B6) of detecting a peripheral apparatuses when it is determined that the memory device does not have the area to store the data;
a step (B7, B8) of transferring by radio communication data items acquired by the data-processing apparatus to the peripheral apparatus detected; and
a step (B9) of managing places at which the data items are transferred to the peripheral apparatus, by means of the radio apparatus.

15. A data management method using a radio apparatus designed to be connected to the data-processing apparatus **characterized by** comprising:
a step (D1) of detecting the attributes of data items acquired by the data-processing apparatus;
a step (D2, D4, D5) of detecting a peripheral apparatuses in accordance with the attributes of data items detected;
a step (D6, D7) of transferring by radio communication data items acquired by the data-processing apparatus to the peripheral apparatus detected; and
a step (D8) of managing places at which the data items are transferred to the peripheral apparatus, by means of the radio apparatus.

16. A data management method using a radio apparatus being connectable to the data-processing apparatus **characterized by** comprising:
a step (E1, E29) of detecting at least two peripheral apparatuses, which have predetermined data items;
a step (E3) of constituting a network that includes the peripheral apparatuses detected;
a step (E6, E7) of transferring data items acquired by the data-processing apparatus to the peripheral apparatuses on the network constituted; and
a step (E8) of managing places at which the data items are transferred to the peripheral apparatuses by means of the radio apparatus.
